# EUROPEAN PATENT SPECIFICATION

(11) **EP 1 650 642 B1**
(45) Date of publication and mention of the grant of the patent: **22.06.2016**
(21) Application number: 04024943.5
(22) Date of filing: 20.10.2004
(51) Int. Cl.: G06F 3/033

(54) **On-board electronic system for a vehicle, vehicle multimedia system and method for configuring an on-board electronic system**
On-board elektronisches System für ein Fahrzeug, Fahrzeug-Multimediasystem und Verfahren zur Konfigurierung von on-board elektronisches System für ein Fahrzeug
Système électronique de bord pour une voiture, système multimedia pour une voiture et méthode pour configurer système électronique de bord pour une voiture

(43) Date of publication of application: 26.04.2006
(73) Proprietor: Harman Becker Automotive Systems GmbH, 76307 Karlsbad (DE)
(72) Inventor: Kolletzki, Johannes, 72666 Neckartailfingen (DE)
(74) Representative: Bertsch, Florian Oliver

(56) References cited:
- EP-A- 0 923 021
- EP-A- 1 403 619
- EP-A2- 1 033 644
- EP-A2- 1 442 920
- DE-A1- 10 237 725
- DE-A1- 19 807 410
- US-A1- 2003 142 066
- US-A1- 2004 143 511
- US-B1- 6 570 591

## Description

This invention relates to an on-board electronic system for a vehicle, a multimedia system, and a method for configuring an on-board electronic system of a vehicle. The invention particularly relates to a vehicle multimedia system which is configurable by a user.

### BACKGROUND OF THE INVENTION

Recently, on-board electronic systems, e.g. multimedia systems or navigation systems have become more and more complex, since these systems provide a variety of functions and features for the user. Often these electronic systems comprise a radio module for listening to different radio stations, an audio module for listening to CDs, tapes, etc., a navigation module for guiding the driver to a predetermined destination, and/or a telecommunication module incorporating a cell phone. All these modules have different parameters or features and functions which can be addressed and edited. Former electronic systems comprised only one or two modules, e.g. a radio module and an audio module. For addressing one of the functions of the different modules the operating module of the electronic system comprised an operating button for each feature. Nowadays, these electronic systems have become more complicated, and the controlling of the electronic system is done by a menu structure shown on a display. For addressing the different features or parameters and for addressing one specific value of the different parameters the menu has to be entered and the item shown in the display has to be chosen for addressing the item and the corresponding parameter or feature of the electronic system. As a consequence, the operation of the electronic system has become complicated and different steps have to be carried out in order to address one certain parameter of the electronic system.

Furthermore, some of the parameters can be addressed with two different operating elements of the operating module. E.g., in some multimedia systems it is possible to change the frequency in a radio operating mode by turning a turn button provided on the operating module and by activating a rocker module provided on the operating module. As a consequence, the user may wish to define for himself how to address a certain parameter or a certain value of the parameter and should have the possibility of redefining the use of one of the redundant operating elements.

### SUMMARY OF THE INVENTION

Therefore, there is a demand for providing the possibility of addressing any of the parameters of the electronic system by operating the operating module in a predetermined way. The user should be able to determine how the operating elements should be operated in order to address and to set one specific parameter or one specific value of the parameter.

These demands are met by the method and by the systems according to the independent claims. In the dependent claims preferred embodiments of the invention are described.

According to a first aspect of the invention an on-board electronic system for a vehicle is provided which comprises an operating module with a plurality of operating elements for selecting a parameter of a plurality of parameters and a specific value of said parameter, the value and the parameter being addressed by operating at least one operating element of the operating module. The on-board electronic system further comprises configuration means for determining a specific parameter or a specific value of the parameter which the user wants to address by operating the operating module. The configuration means further assigns said parameter or said value to at least one operating element, so that said parameter or said value is addressed, when the assigned at least one operating element is activated. The configuration means provides the possibility for the user of defining which parameter or which value of the parameter should be addressed, when one or a plurality of operating elements are activated, the latter also being determined by the user. The user can determine the short-cuts for addressing a specific parameter or a specific value of the electronic system. In the present context, the term parameter indicates a feature or a function of the electronic system, e.g. the frequency in a radio operating mode, the frequency band, or the volume, or the number of tracks on a CD in an audio mode. All these parameters have different values. When the frequency is the defined parameter, the different frequency values of the radio stations are the specific value; when the frequency band is the parameter, the respective values are, e.g., very high frequency band, medium wave band and short wave band. According to the invention, the user now has the possibility of addressing and selecting any parameter or any value of the parameter by using shortly the defined shortcuts. When the user wants to use a predetermined parameter very often in one of the operating modes, the user needs not to open a menu and to scroll through the menu to select one item representing the parameter the user wants to edit, if this parameter is not supposed to be addressable by one simple operating step as provided by the designer of the electronic system. Instead the user can select an operating element with which the parameter can be addressed.

According to a further aspect of the invention, a method is provided for configuring an on-board electronic system of a vehicle, the electronic system comprising an operating module with a plurality of operating elements for selecting a parameter of a plurality of parameters and a specific value of said parameter, the value and the parameter being addressed by operating at least one operating element (or a combination of operating elements) of the operating module. The method comprises the steps of determining a specific parameter or a specific value of the parameter the user wants to address by operating the operating module. In addition to the parameter, the user can determine the way the selected parameter can be addressed by assigning said parameter or said value to at least one operating element, so that said parameter or said value is addressed when the assigned operating element is activated. The user is now able to assign any parameter or any value of the parameter to any of the operating elements, giving the user the possibility of customizing the electronic system.

According to a further aspect of the invention the user enters the configuration operating mode in which said parameter or said value of the parameter and the assignment of the parameter or the value to at least one operating element are determined. In the configuration operating mode the user can define how the electronic system has to be operated for addressing one of the different parameters of the system.

The electronic system furthermore comprises a display on which a menu is displayed through which the parameters and the values of the multimedia system can be addressed and edited. For the user-defined configuration the user enters a menu shown in the display, in which the different parameters and values of the electronic system can be addressed and edited. By scrolling through the menu the user can choose the parameter or the value of the parameter which he or she wants to address. In the next step the user selects the parameter or the value of the parameter which the user wants to address by operating the operating module in the predetermined way. In order to inform the electronic system that the selected parameter or value is chosen as a parameter which should be addressed by using a specific operating element or a specific combination of operating elements, the user may press a predetermined operating element, especially for a predetermined amount of time. E.g., when the parameter which the user wants to select is shown on the display and when the item representing the parameter is marked, so that the user knows that this item can now be addressed, the user may press a button for a predetermined amount of time. The system then "knows" that this parameter or value is selected to be addressed by the user in a user-defined way.

According to a further aspect of the invention, the operating mode may be selected in which the parameter or the value are addressed when said assigned at least one operating module is operated. The user can determine in which operating mode the parameter or the value chosen beforehand can be addressed with the user-defined operating element. The user may wish that a specific user-defined operation of the operating elements for addressing a certain parameter should only be actuated, e.g., in the radio operating mode. Furthermore, the user may wish to use the user-defined operating of the operating module in all operating modes. Whenever the user operates the operating module in the predetermined way, the parameter will be addressed independently of the operating mode. By enabling the use of user-defined operating elements for actuating a user-defined parameter in dependence on the operating mode, the user is able to even further adapt the electronic system according to the user's wishes. E.g., the user may wish to scan the frequency band or to jump from one radio station to the next radio station or may wish to select a predetermined radio station when pressing a predetermined button. However, this should only be possible in the radio operating mode. When the system is working in the navigation operating mode, the activation of said operating mode should not have the same consequences, e.g., the predetermined radio station should not be activated.

According to a further aspect of the invention the user is informed which operating elements or which combination of operating elements are available to address the parameter or the value of the parameter which the user has selected beforehand. The user then selects one operating element or one combination of operating elements for addressing said parameter or said value of said parameter. After the value or the parameter have been determined, the way of operating the operating module with its different operating elements has to be determined.

According to a further aspect of the invention, the step of informing the user of the available operating elements comprises the step of informing the user of the operating elements which, at the assigned operating mode, address no parameter or no value of a parameter when being operated. This means that the system displays the operating elements which have no function in the assigned operating mode. Furthermore, the operating elements are displayed at which at least two operating devices address the same parameter or the same value of the parameter. In some operating modes the same parameter or the same feature can be addressed by two different operating elements, so that there exists a redundant operating element. This redundant operating element can be used for addressing another parameter or another feature of the electronic system. Furthermore, the user is informed of the operating elements which already address one of the parameters or one of the values of the parameter. The user is informed of the operating devices which already address one specific function as designed by the designer of the electronic system and is also informed of the user-defined operating devices. By displaying the user-defined operating elements the user is able to overwrite an assigned parameter. Finally, the user determines the operating element or the combination of operating elements which the user wants to use in order to address said parameter or said value of the parameter. However, it is also possible to configure the system in such a way that there exist keys to which new parameters cannot be assigned. The designer of the electronic system can configure the system in such a way that new parameters cannot be assigned to certain operating elements (e.g. the on-off operating element) in order to ensure the functioning of the system.

When the user has chosen the operating device which he or she wants to use in order to address a certain parameter, the user is further informed what possible ways of operating the operating elements have, the user determining the way how said operating element or the combination of operating elements should be operated for addressing the parameter or the value of said parameter. E.g., if the operating element which is selected for addressing a certain function is a button, the button can either be short-pressed, long-pressed, or double-pressed. The user then has to define which way the operating element should be operated in order to address a certain parameter.

According to a further aspect of the invention, the method further comprises the step of displaying at least some of the possible values of said parameter, when a parameter has been assigned to said at least one operating element. The user can choose whether a parameter should be addressed or whether a value of the parameter should be addressed, when the operating elements are operated as defined by the user. When the user has decided to address the parameter and not one of the values, the system may display some of the possible values or all possible values. This is shown by the following example. When the user has decided to address and to select the parameter frequency or the parameter radio stations by pressing a predetermined operating element, the system may be configured in such a way that the system is hooked to an operating mode in which the frequency or the radio stations can be edited. In order to edit the values, the values may be displayed. The user may have defined that the possible frequencies in the frequency band are displayed when the user has pressed a predetermined operating element. When the frequencies are displayed, the user may then have the possibility of scanning the frequency band by operating the predetermined operating element another time or by operating another operating element. If, however, the user has configured the system in such a way that a certain frequency, on which a certain radio program is broadcast, is selected when the operating module is operated in the predetermined way, the user has already selected the value itself.

According to a further embodiment of the invention, the operation may be determined which the electronic system will carry out when the operating module is operated in the way determined by the user for selecting the addressed parameter. This is explained by the following example. The user may have selected a parameter comprising two possible values, which is addressed when the operating module is operated in the way determined by the user for selecting the addressed parameter. When the parameter has only two possible values, the user may wish to toggle its value whenever he or she presses the predetermined operating device or the predetermined combination for operating devices. In order to determine the operation which the electronic system will carry out, the user has to define whether he or she only wants to select the parameter or whether he or she already wants to edit the parameter and change its value. Instead of toggling the value, the user may also wish to always enable or disable the function of the parameter. In the case when the selected parameter is the traffic channel, the user could also configure the system in such a way that the search for a traffic channel is always enabled or disabled when the predetermined operating element is activated.

According to a further aspect of the invention, the assignment of a parameter or a value to at least one operating element can also be done in the following way: When the user has determined the parameter or the value of the parameter which the user wants to address by operating the operating module, he or she can also press the operating element or the combination of operating elements in a predetermined way for defining how the parameter or the value should be addressed. The user assigns the parameter to the operating element by operating it as intended for addressing said parameter.

According to a further aspect of the invention, the electronic system comprises at least an audio module, a telecommunication module, a radio module, a navigation module, the parameters representing the different features or functions of the different modules.

According to a further aspect of the invention, the invention relates to a vehicle multimedia system comprising an on-board electronic system as described above.

A method and a system for a user-defined configuration of the operating elements according to the invention will now be described by way of example with reference to the accompanying drawings, in which:

### BRIEF DESCRIPTION OF THE DRAWINGS

- Fig. 1: shows a front view of an on-board electronic system comprising multiple operating elements;
- Fig. 2: shows a flowchart for determining the way of operation of the operating elements shown in Fig. 1; and
- Figs. 3 and 4: show, in further detail, how to determine a parameter and how to assign said parameter to at least one operating element.

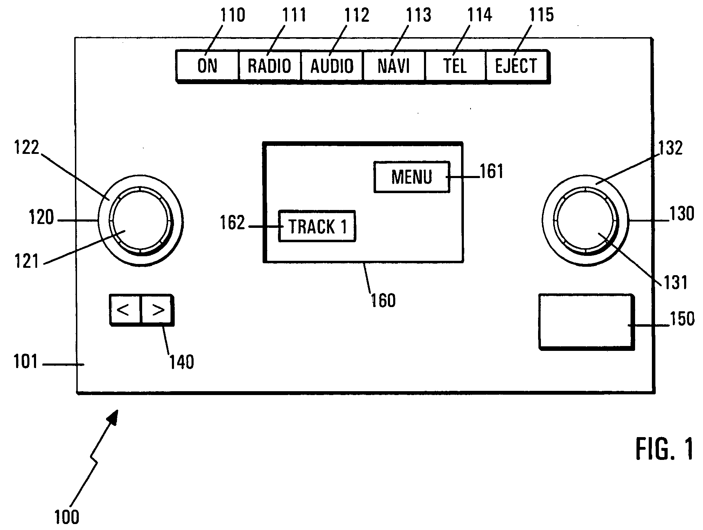

Referring to Fig. 1 an on-board electronic system 100 is shown. In the present context, the on-board electronic system is a multimedia system which is normally incorporated into the dashboard of a vehicle. The electronic system of Fig. 1 comprises different modules, such as a radio module, an audio module, a navigation module, and a telecommunication module. For enabling the different operating modes of the different modules, the electronic system 100 comprises an operating module 101 on the front side of the electronic system with operating elements 111 to 114 which, in the present example, are implemented as press-buttons. The operating element 111 is used for starting the radio operating mode, the button 112 is used for starting the audio operating mode, button 113 is pressed when the driver should be directed to a predetermined destination location, and button 114 is pressed to start the telecommunication operating mode. Furthermore, buttons 110 and 115 are provided to turn on the electronic system 100 and to eject a storage system, e.g., a CD ROM or DVD which may be used in the navigation or audio mode, the slit for introducing the storage medium not being shown in the present embodiment.

The system may further comprise two combined operating elements 120 and 130. These operating elements are designed as combined turn press buttons 120 and 130. These buttons comprise a first part 121 and 131 which can be used for pressing the elements 120 and 130, respectively. Furthermore, a part 122 and 132 is provided which can be used to turn the element.

Furthermore, a rocker element 140 is provided and a button 150. All these operating element address a specific parameter or specific value of the parameter of the electronic system when they are operated. The addressed parameter depends on the fact in which operating mode the electronic system 100 is working. E.g., the rocker element 140 may be used to scan the frequency band, when the system is working in the radio operating mode.

Furthermore, a display 160 is shown informing the user of the current operating status of the electronic system. In the embodiment shown the display comprises a first item 161 (called menu item) and a second item 162. In the embodiment shown, item 162 informs the user that track 1 of an audio CD is playing at the moment. The menu item 161 helps to enter a menu in which all of the different parameters or features or functions of the electronic system can be edited. By entering the menu and by scrolling through the different items shown when the menu is entered the user can define and select the different parameters of the electronic system 100. It should be understood that the electronic system may comprise many more items shown on the display 160 or may comprise another way of informing the user in which operating state the system is working. Furthermore, it should be understood that the system may comprise many other operating elements which could also be operated in a completely different way.

All the operating elements shown in Fig. 1 may address a different parameter depending on the operating mode in which the system 100 is working. E.g., when working in the radio or audio mode part 122 of the turn press button 120 may be used to control the volume, the right turn press button 130 being used for entering the menu and for editing the system and its parameters. In the different operating modes several operating elements are also used in a redundant way, e.g., in the radio operating mode the frequency band can be scanned by either operating the rocker element 140 or part 132 in order to change the selected frequency. Thus, there may exist a case that one parameter or one value of a parameter is addressed with two different operating elements. As a consequence, the user may wish to redefine the use of one of the operating elements, so that another parameter of the system is addressed by operating the operating element.

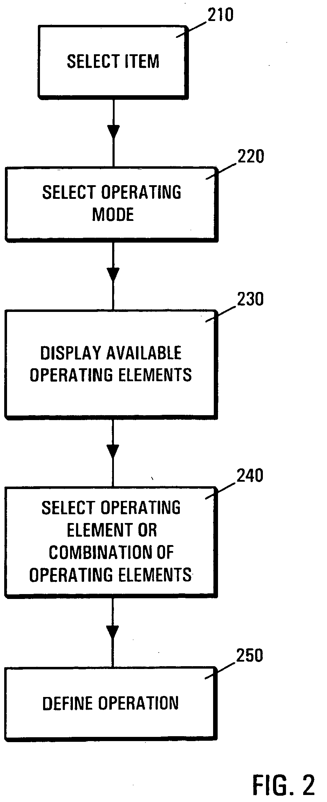

In Fig. 2 a flowchart is shown comprising the different steps for configuring the electronic system in a user-defined way. In order to do so, according to a first embodiment of the invention, the user may enter the menu shown in item 161 of Fig. 1 and may select the parameter which he or she wants to address by operating the operating elements in a predetermined way (step 210). E.g., the user may wish to address a certain frequency comprising a certain radio program. For doing so, the user will go through the menu and will select the radio program item and may select the radio program out of a list of received radio programs stored in the system.

In a second step 220 the user can define the context in which the parameter selected in step 210 should be addressed with the user-defined keys. In step 220 the user can define whether the system should address the selected parameter independently of the operating mode, i.e. in all cases, or whether the parameter should only be addressed in a specific operating mode. In the present example this means that the user may wish to address the specific radio program only when the system is working in a radio operating mode. However, the user may also choose to address said radio program when the system is working in an audio or navigation operating mode, when the user has pressed the operating module in a predetermined way as explained in the next steps.

When the user has determined which parameter should be addressed in what operating mode, the system displays the available operating elements in step 230 the user can select or addressing the parameter selected in step 210. In step 240 the user then selects the operating element or the combination of operating elements which, when used, address the parameter selected in step 220. In the example above, this means that the user determines how the radio program selected in step 220 should be addressed, so that the user can choose this radio program.

In step 250 the user has to define what should be done with the selected parameter. This is shown by the following example. As the user has selected a certain radio program in step 210 and after the determination of the operating elements which should be used to address said radio program, the user has to define what should be done with the chosen radio program. The user may wish to select the radio program, so that it is broadcast over the loudspeakers of the electronic system, the user may also wish that the selected radio program is used as a program for obtaining traffic information, or the radio program may also be used for filtering, etc. Summarizing, the user has to define in step 250 what to do with the selected parameter. It should be understood that step 250 could also be carried out directly after step 210 before selecting the operating mode. Depending on the fact whether the selected parameter has different values or whether different functions can be carried out with the selected parameter the function itself has to be determined.

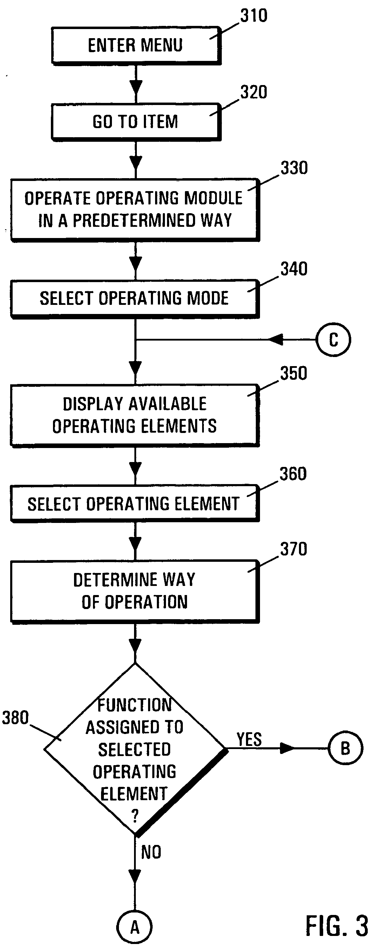

In Fig. 3 the way of configuring the system is shown in more detail. By selecting the item or the parameter the user wants to address, he or she has to enter the menu in step 310. This can be done by operating one of the operating elements shown in Fig. 1 in a predetermined way. Once the menu is entered, i.e. once the menu is marked in the display and the different items of the menu are shown in the display, the user can scroll through the menu and go to the item representing the parameter which he or she wants to address (step 320). In order to enter the configuration operating mode, the user may operate the operating module in a predetermined way in step 330. E.g. when on the display the parameter to be addressed is marked, the user may have to press a predetermined operating element for a predetermined amount of time, so that the system knows that the user wants to assign one specific operating element or a combination of operating elements to the selected parameter.

In step 340 the user may further select the context in which the selected operating element should have the assigned function (step 340 corresponds to step 220). In step 350 the possible operating elements are displayed. In this step 350 the display may display the operating elements which, at the assigned operating mode in step 340, address no parameter or no value of a parameter when being operated. The system may furthermore display the operating devices which are redundant, i.e. at which two operating devices address the same parameter or the same value of the parameter. Furthermore, the display may display the operating elements or the combination for operating elements, to which a predetermined parameter has already been assigned when being operated. The parameter could have been assigned during the manufacturing process by the designer of the electronic system or by the user during use. The display may therefore differentiate further between designer assigned operating elements and user assigned operating elements.

In step 360 the operating element or the combination of operating elements are selected. This is possible by marking the operating element or the combination of operating elements shown on the display in step 350 or it is possible to press or to operate the operating element or the combination of operating elements which the user wants to use to address the parameter determined in step 320.

The different operating elements have different ways of operation depending on the design of the operating element. If the operating element is a button, this button may be operated with a long press, with a short press or a double press. When the operating element is an operating element to be turned, the user can turn it to the right or to the left. Thus, the user has to define in step 370 how the operating element or the combination of operating elements selected in step 360 should be used. The selection how to operate the operating elements can either be made by chosing one of the possibilities shown on the display, the display showing the different possibilities for operating the operating element selected in step 360. Another possibility is to operate the selected operating element directly in the way the user wants to choose for addversing a parameter or a function.

In step 350 the operating elements which already had a user-defined function were displayed. The user should be able to reassign a parameter or function to a new operating element. Furthermore, the operating elements were displayed in step 350 for which two operating elements address the same function. Therefore, in step 380 it is asked whether there is already a function assigned to the selected operating element or the selected combination of operating elements.

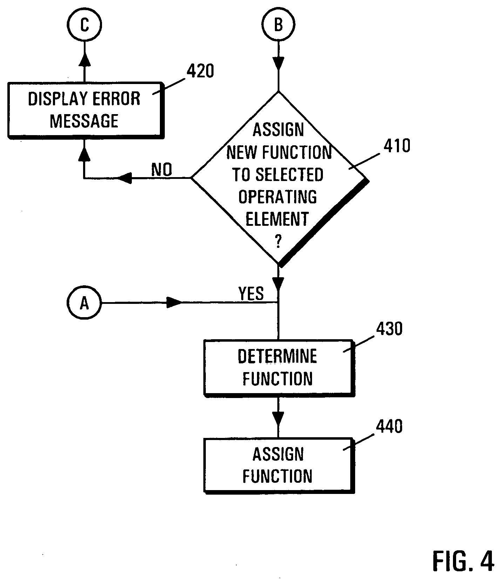

In Fig. 4 the rest of the flowchart shown in Fig. 3 is shown and will be explained in further detail. If the selected operating element selected in step 360 already addresses a parameter (decision YES in step 380) it is asked in step 410 whether the new function or the new parameter should be assigned to the selected operating element. If the user wants to overwrite an earlier made selection, he or she will continue with YES in the flowchart of Fig. 4. If, however, the user does not want to overwrite the selected parameter, the system may display a message "assign new function". If the user selects NO, what means that the user does not want to overwrite the assigned function, the system will return to step 350 in wich the available operating elements are displayed to the user. The user can then reselect a new operating element or a new combination of operating elements which should be operated to address the parameter or the value of the parameter determined in step 320.

If no function is assigned to the selected operating element in step 380 the system will continue with step 430. In step 430 the function itself has to be determined. Normally there are several possibilities or values for the parameter selected in step 320. As discussed before, when a certain radio program is selected, it has to be decided what to do with said radio program. This is explained in a further example. When the parameter determined in step 320 is the item traffic channel, it has to be decided what function should be executed. In the case of the traffic channel parameter, the user can enable the traffic channel parameter, so that the selected radio program comprises traffic news, furthermore the parameter traffic channel could be disabled. In step 430 it has then to be determined whether, when the selected operating element or the selected combination of operating elements is operated, the value of the traffic channel should be toggled, so that, when in the present status the traffic channel parameter is enabled, it will be disabled when pressing the operating element in the predetermined way, or whether, when pressing the selected operating element in the predetermined way, the parameter should always be disabled or enabled. In any case, where there are different possibilities for the parameter selected the user has to determine which possibility should be selected or what function should be carried out. Once the function is determined in step 430 the function is assigned to the operating element or the operating elements in step 440.

With the steps shown in Figures 3 and 4, the user can, first of all, select the parameter or the value of the parameter he or she wants to address and can furthermore determine how to operate the operating elements in order to address the selected parameter or the selected value.

In conclusion, the invention helps to customize the electronic system used in a vehicle. In vehicles the space provided for different operating elements is always limited, so that the existing functions and features of the electronic on-board system have to be addressed by going through different menus, thus complicating the operation of such a system. The user is able, according to the invention, to address one parameter which may be an important parameter or which may be used very often in a way to be determined by the user. The user can then define shortcuts to address the parameter, so that the handling of the electronic system is made easier and more comfortable for the user.

Furthermore, the system may be customized to different users. When entering the vehicle the user may inform the electronic system which user is operating the electronic system at the moment. As a consequence, the electronic system will be configured in such a way that the defined shortcuts, which were defined by the present user, are available in the system. Another user may have selected other combination of operating elements to be assigned to other functions, so that each user can operate the electronic system according to the needs of the respective user.

## Claims

1. Method for configuring an on-board electronic system (100) of a vehicle, the electronic system comprising an operating module (101) with a plurality of operating elements (120-150) for selecting a parameter of a plurality of parameters and a specific value of said parameter, the value and the parameter being addressed by operating at least one operating element (120-150) of the operating module, comprising the steps of
- determining a specific parameter or a specific value of the parameter, the user wants to address by operating the operating module (101), this step comprising the steps of entering a menu in which the different parameters and the values of the electronic system can be addressed and edited, choosing said parameter or said value of said parameter, and selecting said parameter or said value the user wants to address by operating the operating module (101), and
informing the user which operating elements (120-150) or which combination of operating elements (120-150) are available to address said parameter or said value of said parameter, the user selecting one operating element or a combination of operating elements for addressing said parameter or said value of said parameter,
- assigning said parameter or said value to at least one operating element (120-150), so that said parameter or said value is addressed when the assigned at least one operating element is activated.

2. Method according to claim 1, wherein the user enters a configuration operating mode in which said parameter or said value and the assignment of the parameter or the value to at least one operating element (120-150) are determined.

3. Method according to any of the preceding claims, further comprising the step of selecting an operating mode in which said parameter or said value are addressed when said assigned at least one operating element (120-150) is operated.

4. Method according to claim 1, wherein the step of informing the user of the available operating elements comprises the step of informing the user of the operating elements (120-150) which, at the assigned operating mode, address no parameter or no value of an parameter when being operated, of the operating elements (120-150), at which at least two operating elements (120-150) address the same parameter or the same value of the parameter, and of the operating devices which already address one of the parameters or one of the values of the parameter, the user determining the operating element or the combination of operating elements the user wants to use to address said parameter or said value of said parameter.

5. Method according to claim 4, further comprising the step of informing the user for each operating element (120-150) what possible ways of operating said operating elements has, the user determining the way how said operating element or the combination of operating elements should be operated for addressing said parameter or said value of said parameter.

6. Method according to any of the preceding claims, further comprising the step of displaying at least some of the possible values of said parameter when a parameter has been assigned to said at least one operating element.

7. Method according to any of the preceding claims, further comprising the step of determining the operation to be carried out on the selected parameter or value, when the operating module (101) is operated the way determined by the user for selecting the addressed parameter or value.

8. Method according to any of the preceding claims, wherein, when the user has determined the parameter or the value of the parameter the user wants to address by operating the operating module (101), he/she presses the operating elements (120-150) or the combination of operating elements in a predetermined way for defining how said parameter or said value is to be addressed.

9. On-board electronic system (100) for a vehicle comprising an operating module (101) with a plurality of operating elements (120-150) for selecting a parameter of a plurality of parameters and a specific value of said parameter, the value and the parameter being addressed by operating at least one operating element of the operating module (101), a display (160) on which a menu (161) is displayed through which the parameters and the values of the multimedia system can be addressed and edited, in that the display informs the user which operating elements (120-150) or which combination of operating elements (120-150) are available to address said parameter or said value of said parameter, the user selecting one operating element or a combination of operating elements for addressing said parameter or said value of said parameter, wherein the system furthermore comprises configuration means for determining a specific parameter or a specific value of the parameter the user wants to address by operating the operating module, and for assigning said parameter or said value selected by the user by entering the menu and choosing said parameter or said value to at least one operating element, so that said parameter or said value is addressed when the assigned at least one operating element is activated.

10. Electronic system according to claim 9, **characterized by** further comprising at least on of an audio module, a telecommunication module, a radio module, a navigation module, the parameters being different features of the modules.

11. Electronic system according to claims 9 or 10, **characterized by** functioning according to a method as described in any of claims 1 to 8.

12. Vehicle multimedia system comprising an on-board electronic system according to any of claims 9 to 11.

## Patentansprüche

1. Verfahren zur Konfigurierung eines elektronischen On-board-Systems (100) eines Fahrzeugs, wobei das elektronische System ein Betriebsmodul (101) mit einer Vielzahl von Betriebselementen (120-150) zum Auswählen eines Parameters einer Vielzahl von Parametern und eines spezifischen Wertes des Parameters umfasst, wobei der Wert und der Parameter durch das Betreiben von zumindest einem Betriebselement (120-150) des Betriebsmoduls adressiert werden, wobei das Verfahren folgende Schritte umfasst:
- Bestimmen eines spezifischen Parameters oder eines spezifischen Wertes des Parameters, den der Benutzer durch das Betreiben des Betriebsmoduls (101) adressieren möchte; dieser Schritt umfasst die Schritte des Aufrufens eines Menüs, in dem die unterschiedlichen Parameter und Werte des elektronischen Systems adressiert und bearbeitet werden können, das Wählen des Parameters oder des Wertes des Parameters und das Auswählen des Parameters oder des Wertes, den der Benutzer durch das Betreiben des Betriebsmoduls (101) adressieren möchte, und
Informieren des Benutzers, welche Betriebselemente (120-150) oder welche Kombination von Betriebselementen (120-150) zum Adressieren des Parameters oder des Wertes des Parameters zur Verfügung stehen, wobei der Benutzer ein Betriebselement oder eine Kombination von Betriebselementen zum Adressieren des Parameters oder des Wertes des Parameters auswählt,
- Zuweisen des Parameters oder des Wertes zu zumindest einem Betriebselement (120-150), sodass der Parameter oder der Wert adressiert wird, wenn das zumindest eine zugewiesene Betriebselement aktiviert wird.

2. Verfahren nach Anspruch 1, wobei der Benutzer einen Konfigurationsbetriebsmodus eingibt, in dem der Parameter oder der Wert und die Zuordnung des Parameters oder des Wertes zu zumindest einem Betriebselement (120-150) bestimmt werden.

3. Verfahren nach einem der vorhergehenden Ansprüche, ferner den Schritt des Auswählens eines Betriebsmodus umfassend, in dem der Parameter oder der Wert adressiert wird, wenn das zumindest eine zugewiesene Betriebselement (120-150) betrieben wird.

4. Verfahren nach Anspruch 1, wobei der Schritt des Informierens des Benutzers über die zur Verfügung stehenden Betriebselemente den Schritt des Informierens des Benutzers über die Betriebselemente (120-150), die in dem zugewiesenen Betriebsmodus, wenn betrieben, keinen Parameter oder Wert eines Parameters adressieren, über die Betriebselemente (120-150), an welchen zumindest zwei Betriebselemente (120-150) denselben Parameter oder denselben Wert des Parameters adressieren, und über die Betriebsvorrichtungen umfasst, die bereits einen der Parameter oder einen der Werte des Parameters adressieren, wobei der Benutzer das Betriebselement oder die Kombination von Betriebselementen bestimmt, die der Benutzer für die Adressierung des Parameters oder des Wertes des Parameters verwenden will.

5. Verfahren nach Anspruch 4, ferner den Schritt des Informierens des Benutzers darüber umfassend, welche möglichen Betriebsarten jedes Betriebselement (120-150) aufweist, wobei der Benutzer die Art bestimmt, wie das Betriebselement oder die Kombination von Betriebselementen für die Adressierung des Parameters oder des Wertes des Parameters betrieben werden soll.

6. Verfahren nach einem der vorhergehenden Ansprüche, ferner den Schritt des Anzeigens zumindest einiger möglicher Werte des Parameters umfassend, wenn ein Parameter dem zumindest einen Betriebselement zugewiesen wurde.

7. Verfahren nach einem der vorhergehenden Ansprüche, ferner den Schritt des Bestimmens des bezüglich des ausgewählten Parameters oder Wertes auszuführenden Arbeitsvorgangs umfassend, wenn das Betriebsmodul (101) auf die Art betrieben wird, die der Benutzer zum Auswählen des adressierten Parameters oder Wertes bestimmt hat.

8. Verfahren nach einem der vorhergehenden Ansprüche, wobei, wenn der Benutzer den Parameter oder den Wert des Parameters bestimmt hat, den der Benutzer durch den Betrieb des Betriebsmoduls (101) adressieren möchte, der Benutzer die Betriebselemente (120-150) oder die Kombination von Betriebselementen auf eine festgelegte Art betätigt, um zu definieren, wie der Parameter oder der Wert adressiert werden soll.

9. Elektronisches On-board-System (100) für ein Fahrzeug, umfassend ein Betriebsmodul (101) mit einer Vielzahl von Betriebselementen (120-150) zum Auswählen eines Parameters aus einer Vielzahl von Parametern und eines bestimmten Wertes des Parameters, wobei der Wert und der Parameter durch das Betreiben von zumindest einem Betriebselement des Betriebsmoduls (101) adressiert werden, eine Anzeige (160), auf der ein Menü (161) angezeigt wird, durch welches die Parameter und die Werte des Multimediasystems adressiert und bearbeitet werden können, **dadurch gekennzeichnet, dass** die Anzeige den Benutzer darüber informiert, welche Betriebselemente (120-150) oder welche Kombination von Betriebselementen (120-150) zur Adressierung des Parameters oder des Wertes des Parameters zur Verfügung stehen, wobei der Benutzer ein Betriebselement oder eine Kombination von Betriebselementen zur Adressierung des Parameters oder des Wertes des Parameters auswählt, wobei das System ferner Konfigurationsmittel zur Bestimmung eines spezifischen Parameters oder eines spezifischen Wertes des Parameters, den der Benutzer durch den Betrieb des Betriebsmoduls adressieren will, und zur Zuweisung des Parameters oder des Wertes umfasst, den der Benutzer durch Aufrufen des Menüs und Wählen des Parameters oder des Wertes zu zumindest einem Betriebselement ausgewählt hat, sodass der Parameter oder der Wert adressiert wird, wenn das zumindest eine zugewiesene Betriebselement aktiviert wird.

10. Elektronisches System nach Anspruch 9, **dadurch gekennzeichnet, dass** es ferner zumindest ein Audiomodul, ein Telekommunikationsmodul, ein Funkmodul oder ein Navigationsmodul umfasst, wobei es sich bei den Parametern um verschiedene Merkmale der Module handelt.

11. Elektronisches System nach Anspruch 9 oder 10, **dadurch gekennzeichnet, dass** es gemäß einem Verfahren, wie in einem der Ansprüche 1 bis 8 beschrieben, funktioniert.

12. Fahrzeug-Multimediasystem, ein elektronisches On-board-System nach einem der Ansprüche 9 bis 11 umfassend.

## Revendications

1. Procédé de configuration d'un système électronique de bord (100) d'une voiture, le système électronique comprenant un module de commande (101) avec une pluralité d'éléments de commande (120-150) pour la sélection d'un paramètre d'une pluralité de paramètres et d'une valeur spécifique dudit paramètre, la valeur et le paramètre étant adressés par actionnement d'au moins un élément de commande (120-150) du module de commande, comprenant les étapes de
- détermination d'un paramètre spécifique ou d'une valeur spécifique du paramètre que l'utilisateur souhaite adresser par actionnement du module de commande (101), cette étape comprenant les étapes d'accès à un menu dans lequel les différents paramètres et les valeurs du système électronique peuvent être adressés et édités, de choix dudit paramètre ou de ladite valeur dudit paramètre et de sélection dudit paramètre ou de ladite valeur que l'utilisateur souhaite adresser par actionnement du module de commande (101), et
information de l'utilisateur sur les éléments de commande (120-150) ou sur la combinaison d'éléments de commande (120-150) qui sont disponibles pour adresser ledit paramètre ou ladite valeur dudit paramètre, l'utilisateur sélectionnant un élément de commande ou une combinaison d'éléments de commande pour adresser ledit paramètre ou ladite valeur dudit paramètre,
- attribution dudit paramètre ou de ladite valeur à au moins un élément de commande (120-150), de sorte que ledit paramètre ou ladite valeur est adressé lorsque l'au moins un élément de commande attribué est activé.

2. Procédé selon la revendication 1, dans lequel l'utilisateur accède à un mode de commande de configuration dans lequel ledit paramètre ou ladite valeur et l'attribution du paramètre ou de la valeur à au moins un élément de commande (120-150) sont déterminés.

3. Procédé selon l'une quelconque des revendications précédentes, comprenant en outre l'étape de sélection d'un mode de commande dans lequel ledit paramètre ou ladite valeur sont adressés lorsque ledit au moins un élément de commande (120-150) attribué est actionné.

4. Procédé selon la revendication 1, dans lequel l'étape d'information de l'utilisateur des éléments de commande disponibles comprend l'étape d'information de l'utilisateur des éléments de commande (120-150) qui, dans le mode de commande attribué, n'adressent aucun paramètre ou aucune valeur d'un paramètre lorsqu'ils sont actionnés, des éléments de commande (120-150), pour lequel au moins deux éléments de commande (120-150) adressent le même paramètre ou la même valeur du paramètre, et des dispositifs de commande qui adressent déjà un des paramètres ou une des valeurs du paramètre, l'utilisateur déterminant l'élément de commande ou la combinaison d'éléments de commande que l'utilisateur souhaite utiliser pour adresser ledit paramètre ou ladite valeur dudit paramètre.

5. Procédé selon la revendication 4, comprenant en outre l'étape d'information de l'utilisateur pour chaque élément de commande (120-150) sur les moyens de commande possibles desdits éléments de commande, l'utilisateur déterminant comment ledit élément de commande ou la combinaison d'éléments de commande doit être actionné pour adresser ledit paramètre ou ladite valeur dudit paramètre.

6. Procédé selon l'une quelconque des revendications précédentes, comprenant en outre l'étape d'affichage d'au moins quelques-unes des valeurs possibles dudit paramètre lorsqu'un paramètre a été attribué audit au moins un élément de commande.

7. Procédé selon l'une quelconque des revendications précédentes, comprenant en outre l'étape de détermination de l'actionnement à effectuer sur le paramètre ou la valeur sélectionné, lorsque le module de commande (101) est actionné comme déterminé par l'utilisateur pour sélectionner le paramètre ou la valeur adressé.

8. Procédé selon l'une quelconque des revendications précédentes, dans lequel, lorsque l'utilisateur a déterminé le paramètre ou la valeur du paramètre que l'utilisateur souhaite adresser par actionnement du module de commande (101), il/elle appuie sur les éléments de commande (120-150) ou la combinaison d'éléments de commande d'une manière prédéterminée pour définir comment ledit paramètre ou ladite valeur doit être adressé.

9. Système électronique de bord (100) pour une voiture comprenant un module de commande (101) avec une pluralité d'éléments de commande (120-150) pour la sélection d'un paramètre d'une pluralité de paramètres et d'une valeur spécifique dudit paramètre, la valeur et le paramètre étant adressés par actionnement d'au moins un élément de commande du module de commande (101), un écran (160) sur lequel un menu (161) est affiché via lequel les paramètres et les valeurs du système multimédia peuvent être adressés et édités, en ce que l'écran informe l'utilisateur sur les éléments de commande (120-150) ou sur la combinaison d'éléments de commande (120-150) qui sont disponibles pour adresser ledit paramètre ou ladite valeur dudit paramètre, l'utilisateur sélectionnant un élément de commande ou une combinaison d'éléments de commande pour adresser ledit paramètre ou ladite valeur dudit paramètre, dans lequel le système comprend en outre des moyens de configuration pour déterminer un paramètre spécifique ou une valeur spécifique du paramètre que l'utilisateur souhaite adresser par actionnement du module de commande et pour attribuer ledit paramètre ou ladite valeur sélectionné par l'utilisateur en accédant au menu et en choisissant ledit paramètre ou ladite valeur pour au moins un élément de commande, de sorte que ledit paramètre ou ladite valeur est adressé lorsque l'au moins un élément de commande attribué est activé.

10. Système électronique selon la revendication 9, **caractérisé en ce qu'**il comprend en outre au moins un module audio, un module de télécommunication, un module radio, un module de navigation, les paramètres étant différentes caractéristiques des modules.

11. Système électronique selon les revendications 9 ou 10, **caractérisé en ce qu'**il fonctionne selon un procédé comme décrit dans l'une quelconque des revendications 1 à 8.

12. Système multimédia de voiture comprenant un système électronique de bord selon l'une quelconque des revendications 9 à 11.
